(19) Europäisches Patentamt / European Patent Office / Office européen des brevets

(11) **EP 2 966 276 B1**

(12) **FASCICULE DE BREVET EUROPEEN**

(45) Date de publication et mention
de la délivrance du brevet:
**05.04.2017 Bulletin 2017/14**

(51) Int Cl.:
*F01N 3/20* *(2006.01)*   *F01N 3/28* *(2006.01)*
*F01N 9/00* *(2006.01)*

(21) Numéro de dépôt: **15173379.7**

(22) Date de dépôt: **23.06.2015**

(54) **PROCÉDÉ DE LIMITATION D'UN ENCRASSEMENT D'UN MIXEUR**

VERFAHREN ZUR BEGRENZUNG DER VERSCHMUTZUNG EINES MIXERS

METHOD FOR LIMITING FOULING OF A MIXER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.07.2014 FR 1456505**

(43) Date de publication de la demande:
**13.01.2016 Bulletin 2016/02**

(73) Titulaire: **PEUGEOT CITROËN AUTOMOBILES SA
78140 Vélizy-Villacoublay (FR)**

(72) Inventeurs:
• **SUY, DARA
95360 MONTMAGNY (FR)**
• **TAIBALY, MOUSTANSIR
92700 COLOMBES (FR)**
• **MARECHAL, PATRICE
92250 LA GARENNE COLOMBES (FR)**

(56) Documents cités:
**EP-A1- 2 796 684    DE-U1-202012 011 764**

**Description**

L'invention porte sur un procédé de limitation d'un encrassement d'un mixeur logé à l'intérieur d'une ligne d'échappement qui équipe un moteur à combustion interne d'un véhicule automobile.

Le document US 20070217984 décrit un procédé de calcul d'une température d'un catalyseur de réduction qui équipe une ligne d'échappement dont est pourvu un moteur à combustion interne d'un véhicule automobile. Un tel calcul vise à optimiser une réduction des oxydes d'azote contenus à l'intérieur de gaz d'échappement produits par le moteur à combustion interne et véhiculés par la ligne d'échappement. Le catalyseur de réduction est associé à un injecteur d'un agent de réduction qui facilite une réduction des oxydes d'azote à l'intérieur du catalyseur de réduction.

Un problème général posé dans le domaine réside en un encrassement du catalyseur de réduction et/ou d'un mixeur associé à ce dernier (voir DE202012011764U) et placé en amont du catalyseur de réduction selon un sens de circulation des gaz d'échappement à l'intérieur de la ligne d'échappement. Un tel encrassement est préjudiciable en ce qu'il obère une dépollution des gaz d'échappement qui est souhaitée optimale.

Un but de la présente invention est de proposer un procédé de limitation d'un encrassement d'un mixeur logé à l'intérieur d'une ligne d'échappement associée à un moteur à combustion interne équipant un véhicule automobile, le procédé de limitation étant simple à mettre en oeuvre à partir d'une utilisation de données aisément disponibles.

Un procédé de la présente invention est un procédé de limitation d'un encrassement d'un mixeur logé à l'intérieur d'une ligne d'échappement qui équipe un moteur à combustion interne d'un véhicule automobile.

Selon la présente invention, le procédé de limitation comprend une première étape de modélisation de premiers échanges thermiques entre des gaz d'échappement et une première paroi du mixeur, une deuxième étape de modélisation de deuxièmes échanges thermiques entre un air extérieur au véhicule automobile et une deuxième paroi délimitant la ligne d'échappement, une troisième étape de modélisation de troisièmes échanges thermiques entre un agent réducteur injecté à l'intérieur de la ligne d'échappement et la première paroi lors d'une réaction de décomposition de l'agent réducteur, une quatrième étape de calcul d'une température de la première paroi, une cinquième étape de détermination d'un risque d'encrassement du mixeur, et une sixième étape de décision d'une injection d'agent réducteur à l'intérieur de la ligne d'échappement.

La première étape de modélisation des premiers échanges thermiques entre les gaz d'échappement et la première paroi du mixeur comprend avantageusement une phase de calcul d'un premier flux thermique $FT1_{gaz/paroi}$ entre les gaz d'échappement et la première paroi.

La deuxième étape de modélisation des deuxièmes échanges thermiques entre un air extérieur au véhicule automobile et une deuxième paroi délimitant la ligne d'échappement comprend avantageusement une phase de calcul d'un deuxième flux thermique $FT2_{air/paroi}$ entre l'air extérieur et une troisième paroi du mixeur qui est exposée à l'air extérieur.

La troisième étape de modélisation des troisièmes échanges thermiques entre l'agent réducteur et la première paroi lors d'une réaction de décomposition de l'agent réducteur comprend avantageusement des phases de calcul d'énergie nécessaires pour décomposer l'agent réducteur en urée, puis en ammoniac $NH_3$.

La troisième étape de modélisation comprend avantageusement une première phase de calcul qui comprend un calcul d'une énergie dW_AR nécessaire à un réchauffement de l'agent réducteur.

La troisième étape de modélisation comprend avantageusement une deuxième phase de calcul qui comprend un calcul d'une énergie de vaporisation dW_Vap_Eau d'une eau liquide contenue à l'intérieur de l'agent réducteur.

La troisième étape de modélisation comprend avantageusement une troisième phase de calcul qui comprend un calcul d'une énergie dW_Eau_Gaz qui est nécessaire à une mise à la température de la troisième paroi de l'eau à l'état gazeux.

La troisième étape de modélisation comprend avantageusement une quatrième phase de calcul qui comprend un calcul d'une énergie de chauffage dW_Urée nécessaire à un chauffage d'une urée comprise à l'intérieur de l'agent réducteur.

La troisième étape de modélisation comprend avantageusement une cinquième phase de calcul qui comprend un calcul d'une énergie de thermolyse dW_Thermolyse pour obtenir de l'ammoniac $NH_3$.

La troisième étape de modélisation comprend avantageusement une sixième phase de calcul qui comprend un calcul d'une énergie de chauffage dW_HNCO jusqu'à une température d'hydrolyse d'un acide isocyanique.

La troisième étape de modélisation comprend avantageusement une septième phase de calcul qui comprend un calcul d'une énergie d'hydrolyse dW_Hydrolyse d'un acide isocyanique.

La troisième étape de modélisation comprend avantageusement une huitième phase de calcul qui comprend un calcul d'une énergie de chauffage dW_comp_fin de composants finaux.

La quatrième étape de calcul de la température de première paroi comprend avantageusement un calcul de la température de la troisième paroi à partir d'une intégration du premier flux thermique $FT1_{gaz/paroi}$, du deuxième flux thermique $FT2_{air/paroi}$, de l'énergie dW_AR, de l'énergie de vaporisation dW_Vap_Eau, de l'énergie dW_Eau_Gaz, de l'énergie de chauffage dW_Urée, de l'énergie de thermolyse dW_Thermolyse, de l'énergie de chauffage dW_HNCO, de l'énergie d'hydrolyse dW_Hydrolyse et de l'énergie de chauffage dW_comp_fin de composants finaux.

La cinquième étape de détermination d'un risque d'encrassement du mixeur est indifféremment réalisée à partir d'un calcul d'une masse M_AR maximale de l'agent réducteur à injecter, à partir d'un calcul d'une température de paroi $T_{paroi}$ ou bien à partir d'un calcul d'un débit-limite $D_{limite}$ d'agent réducteur par cartographie, pour une mise en oeuvre de la sixième étape de décision de l'injection d'agent réducteur à l'intérieur de la ligne d'échappement.

D'autres caractéristiques et avantages de la présente invention apparaîtront à la lecture de la description qui va en être faite d'exemples de réalisation, en relation avec les figures des planches annexées, dans lesquelles :

La figure 1 est une vue schématique d'une ligne d'échappement de la présente invention.

La figure 2 est une vue schématique d'un procédé de limitation de la présente invention mis en oeuvre pour optimiser un fonctionnement de la ligne d'échappement illustrée sur la figure 1.

La figure 3 est une vue schématique de plages de fonctionnement du procédé illustré sur la figure 2.

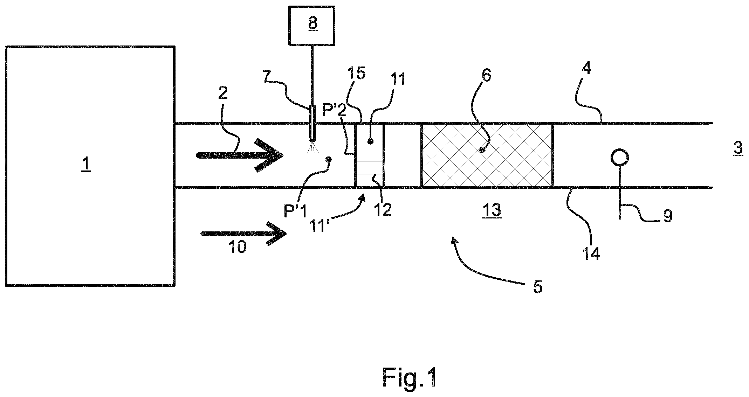

Sur la figure 1, un véhicule automobile est équipé d'un moteur à combustion interne 1 pour permettre son déplacement. Le moteur à combustion interne 1 produit des gaz d'échappement 2 qui sont évacués vers un environnement extérieur 3 par l'intermédiaire d'une ligne d'échappement 4.

La ligne d'échappement 4 loge un système de dépollution 5 pour retenir des polluants, tels que des oxydes d'azote $NO_x$, des hydrocarbures imbrûlés ou des suies préalablement à leur évacuation vers l'environnement extérieur. Le système de dépollution 5 comprend notamment un catalyseur de réduction 6 pour réduire les oxydes d'azote en azote et en eau. Le catalyseur de réduction 6 est logé à l'intérieur de la ligne d'échappement 4 en étant interposé entre un injecteur 7 d'un agent réducteur 8 et une sonde 9 apte à mesurer une teneur des gaz d'échappement 2 en oxydes d'azote $NO_x$. La sonde 9 est placée en aval du catalyseur de réduction 6 selon un sens de circulation 10 des gaz d'échappement 2 à l'intérieur de la ligne d'échappement 4. L'injecteur 7 est prévu pour délivrer l'agent réducteur 8 à l'intérieur de la ligne d'échappement 4, l'agent réducteur 8 étant apte à se décomposer en urée, puis en ammoniac $NH_3$ qui réduit les oxydes d'azote $NO_x$ à l'intérieur du catalyseur de réduction 6.

La réaction de décomposition de l'agent réducteur 8 en ammoniac $NH_3$ est possible grâce à une énergie thermique fournie par les gaz d'échappement 2. La présente invention vise à déterminer si l'énergie thermique nécessaire à la mise en oeuvre de la réaction de décomposition est disponible pour éviter un encrassement du catalyseur de réduction 6 du à une agglomération d'un reliquat d'agent réducteur 8 non décomposé.

La réaction de décomposition de l'agent réducteur 8 en ammoniac $NH_3$ se réalise à l'intérieur d'un mixeur 11 qui est logé à l'intérieur de la ligne d'échappement 4 entre l'injecteur 7 et le catalyseur de réduction 6. Plus particulièrement, la réaction de décomposition se produit sur au moins une première paroi 12 du mixeur 11 lorsqu'une température de première paroi 12 est supérieure à une température-seuil. Dans le cas où la température de la première paroi 12 est inférieure à la température-seuil, l'agent réducteur 8 s'agglomère sur la première paroi 12 au moins et encrasse le mixeur 11.

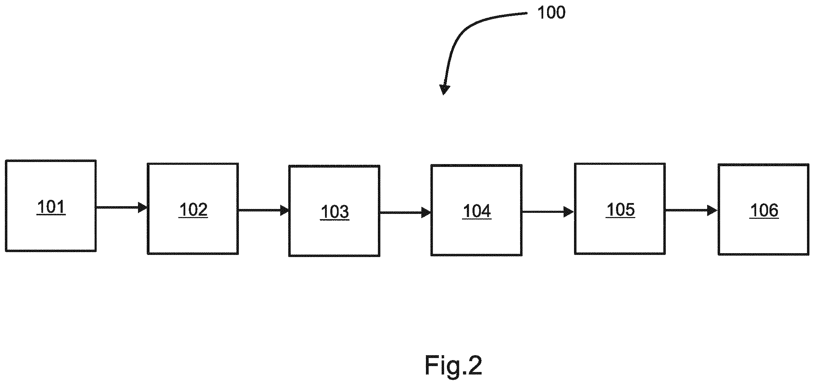

Sur la figure 2, la présente invention propose un procédé de limitation 100 d'un encrassement du mixeur 11 qui comprend une première étape de modélisation 101 de premiers échanges thermiques entre les gaz d'échappement 2 et la première paroi 12 du mixeur 11, puis une deuxième étape de modélisation 102 de deuxièmes échanges thermiques entre un air extérieur 13 au véhicule automobile et une deuxième paroi 14 délimitant la ligne d'échappement 2, puis une troisième étape de modélisation 103 de troisièmes échanges thermiques entre l'agent réducteur 8 et la première paroi 12 lors de la réaction de décomposition, puis une quatrième étape de calcul 104 de la température de première paroi 12, puis une cinquième étape de détermination 105 d'un risque d'encrassement du mixeur 11, puis une sixième étape de décision 106 d'une injection d'agent réducteur 8.

Selon diverses formes de réalisation de la présente invention, la première étape de modélisation 101 des premiers échanges thermiques entre les gaz d'échappement 2 et la première paroi 12 du mixeur 11, la deuxième étape de modélisation 102 des deuxièmes échanges thermiques entre l'air extérieur 13 au véhicule automobile et la deuxième paroi 14 délimitant la ligne d'échappement 2 et la troisième étape de modélisation 103 des troisièmes échanges thermiques entre l'agent réducteur 8 et la première paroi 12 lors de la réaction de décomposition sont indifféremment réalisées successivement ou bien concomitamment.

La première étape de modélisation 101 des premiers échanges thermiques entre les gaz d'échappement 2 et la première paroi 12 du mixeur 11 comprend une phase de calcul d'un premier flux thermique $FT1_{gaz/paroi}$ entre les gaz d'échappement 2 et la première paroi 12 selon la relation [1] :

$$FT1_{gaz/paroi} = \alpha_{gaz/paroi} \times S_{gaz/paroi} \times (T_{gaz} - T_{paroi}) \qquad [1]$$

Dans laquelle :

$\alpha_{gaz/paroi}$ est le coefficient de transfert thermique entre les gaz d'échappement 2 et la première paroi 12. Ce coefficient est fonction d'une température moyenne de la température des gaz d'échappement 2 et de la température de la première paroi 12 ainsi que d'un débit massique des gaz d'échappement 2. Un tel coefficient est par exemple déterminé par cartographie.

$S_{gaz/paroi}$ est la surface du mixeur 11 qui est impacté par les gaz d'échappement 2, autrement dit la somme d'une surface $S_{Tube}$ d'un tube 11' formant une enveloppe externe du mixeur 11 et d'une surface $S_{Ailette}$ des ailettes que comporte le mixeur 11.

Selon une variante préférée dans laquelle le mixeur 11 est conformé selon un cylindre, on a : $S_{Tube} = Longueur_{Tube} \times Diamètre_{Tube} \times \pi$

Avec $Longueur_{Tube}$ représentant une distance entre un premier point P'1 où est estimée la température des gaz d'échappement 2 et un deuxième point P'2 d'entrée des gaz d'échappement 2 à l'intérieur du mixeur 11,
Avec $Diamètre_{Tube}$ représentant un diamètre du mixeur 11
Plus particulièrement encore, on a : $S_{Ailette} = Diamètre_{Tube}^2 \times \pi / 4 \times \alpha_{ailette}$
Avec $\alpha_{ailette}$ représentant un rapport entre une surface des ailettes du mixeur 11 par rapport à un disque de coupe du mixeur 11,
$T_{paroi}$ étant la température moyenne de la matière du mixeur 11,
$T_{gaz}$ étant la température des gaz d'échappement 2 prise en amont du mixeur 11 selon le sens de circulation 10 des gaz d'échappement 2 à l'intérieur de la ligne d'échappement 4.

La deuxième étape de modélisation 102 des deuxièmes échanges thermiques entre un air extérieur 13 au véhicule automobile et la deuxième paroi 14 délimitant la ligne d'échappement 4 comprend une phase de calcul d'un deuxième flux thermique $FT2_{air/paroi}$ entre l'air extérieur 13 et une troisième paroi 15 du mixeur 11 qui est exposée à l'air extérieur 13, selon la relation [2] :

$$FT2_{air/paroi} = \alpha_{air/paroi} \times S_{air/paroi} \times (T_{air} - T_{paroi}) \qquad [2]$$

Dans laquelle :

$\alpha_{air/paroi}$ est le coefficient de transfert thermique entre les gaz d'échappement 2 et la troisième paroi 15. Ce coefficient est fonction d'une température moyenne de la température des gaz d'échappement 2 et de la température de la troisième paroi 15 ainsi que d'un débit massique des gaz d'échappement 2. Un tel coefficient est par exemple déterminé par cartographie.

$S_{air/paroi}$ est une fraction de la surface $S_{Tube}$ du tube 11'. Elle est calculée à partir du premier point P1 et le mixeur 11, pour représenter une perte thermique des gaz d'échappement 2 avant que ces derniers atteignent le mixeur 11. Selon une variante de réalisation, la surface $S_{air/paroi}$ est calibrée à partir d'un coefficient d'ajustement $\beta$ selon la relation [3] :

$$S_{air/paroi} = S_{gaz/paroi} \times \beta \qquad [3]$$

La troisième étape de modélisation 103 des troisièmes échanges thermiques entre l'agent réducteur 8 et la première paroi 12 lors de la réaction de décomposition comprend des phases de calcul d'énergie nécessaires pour décomposer l'agent réducteur 8 en urée, puis en ammoniac $NH_3$ qui sont des réactions endothermiques. Chaque réaction est modélisée et peut être désactivée par l'intermédiaire d'un coefficient de calibration.
Une première phase de calcul comprend un calcul d'une énergie dW_AR nécessaire à un réchauffement de l'agent réducteur 8 comprenant 66% d'eau, selon la relation [4] :

$$dW\_AR = M\_AR \times Cp\_AR \times (T_{vapEau} - T_{injAR}) \qquad [4]$$

Dans laquelle :

M_AR est la masse d'agent réducteur 8 injecté,
Cp_AR est la capacité thermique de l'agent réducteur 8,
$T_{vapEau}$ est la température de vaporisation de l'eau, et
$T_{injAR}$ est la température d'injection de l'agent réducteur 8.

Une deuxième phase de calcul comprend un calcul d'une énergie de vaporisation dW_Vap_Eau de l'eau liquide contenue à l'intérieur de l'agent réducteur 8 à partir de la relation [5] :

$$dW\_Vap\_Eau = Ratio\_Eau\_AR \times M\_AR \times Enth\_Vap\_Eau \qquad [5]$$

Dans laquelle :

Enth_Vap_Eau représente une enthalpie de vaporisation de l'eau contenue dans l'agent réducteur 8,
Ratio_Eau_AR est le ratio massique d'eau contenu dans l'agent réducteur 8. A titre d'exemple, le ratio massique Ratio_Eau_AR est égal à 0.66.

Une troisième phase de calcul comprend un calcul d'une énergie dW_Eau_Gaz qui est nécessaire à une mise à la température de la troisième paroi 15 de l'eau à l'état gazeux selon la relation [6] :

$$dW\_Eau\_Gaz = Ratio\_Eau\_AR \times M\_AR \times Cp_{Eau\_Gaz} \times (T'_{Paroi} - T_{vapEau}) \qquad [6]$$

Dans laquelle :

$C_{pEau\_Gaz}$ est la capacité thermique de l'eau à l'état gazeux,
$T'_{Paroi}$ est la température de la troisième paroi 15, et

Ratio_Eau_AR est le ratio massique d'eau contenu dans l'agent réducteur 8.
Une quatrième phase de calcul comprend un calcul d'une énergie de chauffage dW_Urée nécessaire à un chauffage de l'urée comprise à l'intérieur de l'agent réducteur 8 selon la relation [7] :

$$dW\_Urée = M\_Urée \times Cp_{Urée} \times (T_{thermo} - T_{vapEau}) \qquad [7]$$

Dans laquelle :

M_Urée est une masse d'urée résiduelle,
$Cp_{Urée}$ est une capacité thermique de l'urée,
$T_{thermo}$ est une température de thermolyse de l'urée.

Une cinquième phase de calcul comprend un calcul d'une énergie de thermolyse dW_Thermolyse pour obtenir de l'ammoniac $NH_3$ selon la relation [8] :

$$dW\_Thermolyse = M\_Urée \times Enth\_Thermolyse\_Urée \qquad [8]$$

Dans laquelle :

Enth_Thermolyse_Urée est l'enthalpie de thermolyse de l'urée.

Une sixième phase de calcul comprend un calcul d'une énergie de chauffage dW_HNCO jusqu'à une température d'hydrolyse de l'acide isocyanique pour obtenir de l'ammoniac $NH_3$ selon la relation [9] :

$$dW\_HNCO = M\_HNCO \times Cp_{HNCO} \times (T_{hydrolyse} - T_{thermo}) \qquad [9]$$

Dans laquelle :

M_HNCO représente la masse d'acide isocyanique,
$Cp_{HNCO}$ est la capacité calorifique de l'acide isocyanique, et
$T_{hydrolyse}$ est la température d'hydrolyse de l'acide isocyanique.

Une septième phase de calcul comprend un calcul d'une énergie d'hydrolyse dW_Hydrolyse selon la relation [10] :

$$dW\_Hydrolyse = M\_HNCO \times Enth\_Hydrolyse \qquad [10]$$

Dans laquelle :

Enth_Hydrolyse est l'enthalpie d'hydrolyse de l'acide isocyanique.

Une huitième phase de calcul comprend un calcul d'une énergie de chauffage dW_comp_fin des composants finaux comprenant le dioxyde de carbone, l'ammoniac jusqu'à la température de la troisième paroi.

La quatrième étape de calcul 104 de la température de première paroi 12 comprend un calcul de la température de la troisième paroi 15 à partir de la relation [11] :

$$T_{paroi} = \int (FT1_{gaz/paroi} + FT2_{air/paroi} - dW\_AR - dW\_Vap\_Eau - dW\_Eau\_Gaz -$$

$$dW\_Urée - dW\_Thermolyse - dW\_HNCO - dW\_Hydrolyse - dW\_comp\_fin) / (M_{Tube} \times$$

$$Cp_{Tube}) \qquad [11]$$

Dans laquelle :

$M_{Tube}$ est la masse du tube, et
$Cp_{Tube}$ est la capacité thermique du tube.

A partir de moyens de calcul incrémentiel, la relation [11] est assimilable à la relation [12] :

$$T_{paroi} = \sum (FT1_{gaz/paroi} + FT2_{air/paroi} - dW\_AR - dW\_Vap\_Eau - dW\_Eau\_Gaz -$$

$$dW\_Urée - dW\_Thermolyse - dW\_HNCO - dW\_Hydrolyse - dW\_comp\_fin) / (M_{Tube} \times$$

$$Cp_{Tube}) \qquad [12]$$

Un incrémenteur fonctionnant à une fréquence prédéterminée de la présente invention est apte, à partir de la relation [12] ci-dessus, à déterminer la température de paroi $Tp_{aroi}$. Selon ladite fréquence mise en oeuvre, une convergence de ladite température est plus ou moins rapide. On notera que les flux thermiques $FT1_{gaz/paroi}$ et $FT2_{air/paroi}$ n'étant jamais nuls, il est toujours possible de déterminer une température de paroi.

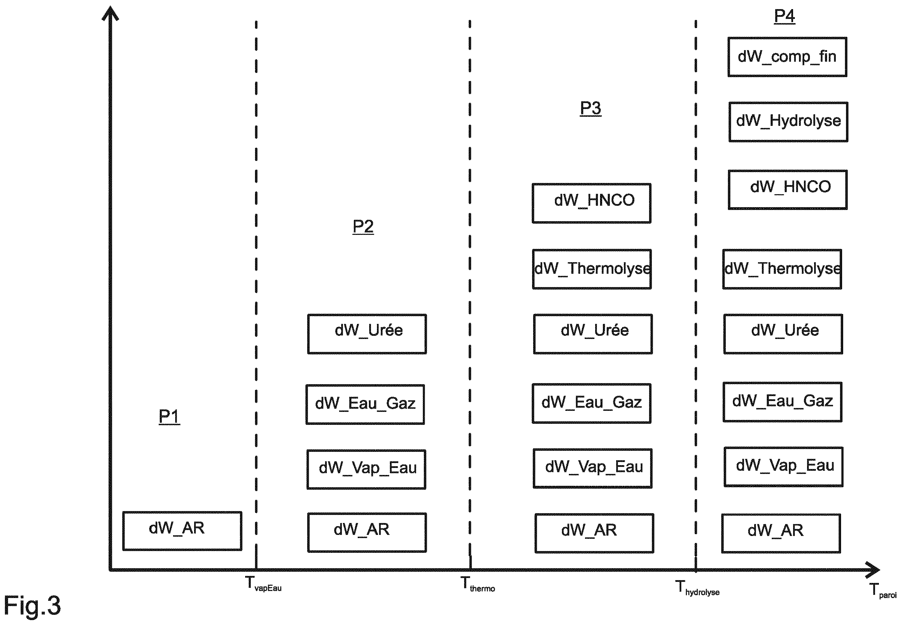

En se reportant sur la figure 3 qui représente les énergies calculées en fonction d'une évolution de la température de la paroi, on détermine quatre plages distinctes en fonction de la température de la paroi.

Dans une première plage P1 pour laquelle la température de paroi est inférieure à la température de vaporisation de l'eau $T_{vapEau}$, il est pris en compte uniquement l'énergie dW_AR nécessaire à un réchauffement de l'agent réducteur 8.

Dans une deuxième plage P2 pour laquelle la température de paroi est comprise entre la température de vaporisation de l'eau $T_{vapEau}$ et la température de thermolyse de l'urée $T_{thermo}$ il est pris en compte l'énergie :

dW_AR qui est l'énergie nécessaire à un réchauffement de l'agent réducteur 8,

dW_Vap_Eau qui est l'énergie de vaporisation de l'eau liquide contenue à l'intérieur de l'agent réducteur 8,

dW_Eau_Gaz qui est l'énergie nécessaire à une mise à la température de la troisième paroi 15 de l'eau à l'état gazeux,

dW_Urée qui est l'énergie nécessaire au réchauffement jusqu'à la température de la troisième paroi 15 de l'urée comprise à l'intérieur de l'agent réducteur 8

Dans une troisième plage P3 pour laquelle la température de paroi est comprise entre la température de thermolyse $T_{thermolyse}$ et la température d'hydrolyse $T_{hydrolyse}$, il est pris en compte l'énergie :

dW_AR nécessaire à un réchauffement de l'agent réducteur 8,

dW_Vap_Eau qui est l'énergie de vaporisation de l'eau liquide contenue à l'intérieur de l'agent réducteur 8,

dW_Eau_Gaz qui est l'énergie nécessaire à une mise à la température de la troisième paroi 15 de l'eau à l'état gazeux,

dW_Urée qui est l'énergie nécessaire au réchauffement jusqu'à la température de thermolyse de l'urée comprise à l'intérieur de l'agent réducteur 8

dW_Thermolyse qui est l'énergie de thermolyse de l'urée comprise à l'intérieur de l'agent réducteur 8.

dW_HNCO qui est l'énergie de chauffage jusqu'à la température de la troisième paroi 15 de l'acide isocyanique,

Dans une quatrième plage P4 pour laquelle la température de paroi est supérieure à la température d'hydrolyse $T_{hydrolyse}$, il est pris en compte :

dW_AR nécessaire à un réchauffement de l'agent réducteur 8,

dW_Vap_Eau qui est l'énergie de vaporisation de l'eau liquide contenue à l'intérieur de l'agent réducteur 8,

dW_Eau_Gaz qui est l'énergie nécessaire à une mise à la température de la troisième paroi 15 de l'eau à l'état gazeux,

dW_Urée qui est l'énergie nécessaire au réchauffement de l'urée comprise à l'intérieur de l'agent réducteur 8

dW_Thermolyse qui est l'énergie de thermolyse de l'urée comprise à l'intérieur de l'agent réducteur 8.

dW_HNCO qui est l'énergie de chauffage jusqu'à une température d'hydrolyse de l'acide isocyanique pour obtenir de l'ammoniac $NH_3$,

dW_Hydrolyse qui est l'énergie d'hydrolyse de l'acide isocyanique et,

dW_comp_fin qui est l'énergie de chauffage des composants finaux.

Selon une première variante de réalisation de la cinquième étape 105 de détermination d'un risque d'encrassement du mixeur 11, on obtient la masse M_AR à partir d'une inversion de la relation [11] qui représente la masse maximale d'agent réducteur 8 à injecter pour ne pas encrasser le mixeur 11.
Selon une deuxième variante de réalisation de la cinquième étape 105 de détermination d'un risque d'encrassement du mixeur 11, on calcule la température de paroi $T_{paroi}$ si une quantité préalablement déterminée par un superviseur de dépollution est injectée. Si la température de paroi $T_{paroi}$ calculée est supérieure à une température-seuil $T_{seuil}$ au-delà de laquelle un encrassement du mixeur 11 apparaît, alors l'injection d'agent réducteur 8 est annulée jusqu'à ce que la troisième paroi 15 ait accumulée suffisamment d'énergie pour que la décomposition de l'agent réducteur 8 se réalise.
Selon une deuxième variante de réalisation de la cinquième étape 105 de détermination d'un risque d'encrassement du mixeur 11, on détermine un débit-limite $D_{limite}$ d'agent réducteur 8 par cartographie à partir de la température de paroi $T_{paroi}$ et d'un débit de consigne de dépollution $D_{cons}$, le débit-limite $D_{limite}$ étant inférieur au débit de consigne de dépollution $D_{cons}$. Il en découle que si le débit D d'agent réducteur 8 est proche du débit de consigne de dépollution $D_{cons}$, on favorise une dépollution par rapport à un risque d'encrassement du mixeur 11. Il en découle également que si le débit D d'agent réducteur 8 est éloigné du débit de consigne de dépollution $D_{cons}$, on risque un encrassement du mixeur 11 par rapport à une dépollution.

La sixième étape de décision 106 de l'injection d'agent réducteur 8 comprend une prise de décision qui est effectuée selon un résultat de la cinquième étape de détermination 105.

L'ensemble de ces dispositions est tel qu'une efficacité de réduction des oxydes d'azote NOx est améliorée à partir d'une prise en compte optimisée de l'ensemble des énergies mises en oeuvre et notamment de l'énergie accumulée à l'intérieur du mixeur 11 pour permettre une injection d'une quantité la plus importante possible d'agent réducteur 8 sans risque d'encrassement du mixeur 11. Il en résulte finalement une optimisation du fonctionnement du catalyseur de réduction 6 et donc une meilleure dépollution des gaz d'échappement 2. Il en résulte également un meilleur calibrage du moteur à combustion interne 1 dont des limites de fonctionnement sont optimisées avec une minimisation de rejet de dioxyde de carbone sans augmentation d'un rejet d'oxydes d'azote NOx, ce qui permet de surcroit une optimisation d'une consommation en carburant du véhicule automobile.

## Revendications

1. Procédé de limitation (100) d'un encrassement d'un mixeur (11) logé à l'intérieur d'une ligne d'échappement (4) qui équipe un moteur à combustion interne (1) d'un véhicule automobile, le procédé de limitation (100) comprenant une première étape de modélisation (101) de premiers échanges thermiques entre des gaz d'échappement (2) et une première paroi (12) du mixeur (11), une deuxième étape de modélisation (102) de deuxièmes échanges thermiques entre un air extérieur (13) au véhicule automobile et une deuxième paroi (14) délimitant la ligne d'échappement (4), une troisième étape de modélisation (103) de troisièmes échanges thermiques entre un agent réducteur (8) injecté à l'intérieur de la ligne d'échappement (4) et la première paroi (12) lors d'une réaction de décomposition de l'agent réducteur (8), une quatrième étape de calcul (104) d'une température de la première paroi (12), une cinquième étape de détermination (105) d'un risque d'encrassement du mixeur (11), et une sixième étape de décision (106) d'une injection d'agent réducteur (8) à l'intérieur de la ligne d'échappement (4).

2. Procédé de limitation (100) selon la revendication précédente, **caractérisé en ce que** la première étape de modélisation (101) des premiers échanges thermiques entre les gaz d'échappement (2) et la première paroi (12) du mixeur (11) comprend une phase de calcul d'un premier flux thermique $FT1_{gaz/paroi}$ entre les gaz d'échappement (2) et la première paroi (12).

3. Procédé de limitation (100) selon l'une quelconque des revendications précédentes, **caractérisé en ce que** la deuxième étape de modélisation (102) des deuxièmes échanges thermiques entre un air extérieur (13) au véhicule automobile et une deuxième paroi (14) délimitant la ligne d'échappement (4) comprend une phase de calcul d'un deuxième flux thermique $FT2_{air/paroi}$ entre l'air extérieur (13) et une troisième paroi (15) du mixeur (11) qui est exposée à l'air extérieur (13).

4. Procédé de limitation (100) selon l'une quelconque des revendications précédentes, **caractérisé en ce que** la troisième étape de modélisation (103) des troisièmes échanges thermiques entre l'agent réducteur (8) et la première paroi (12) lors d'une réaction de décomposition de l'agent réducteur (8) comprend des phases de calcul d'énergie nécessaires pour décomposer l'agent réducteur (8) en urée, puis en ammoniac $NH_3$.

5. Procédé de limitation (100) selon la revendication 4, **caractérisé en ce que** la troisième étape de modélisation (103) comprend une première phase de calcul qui comprend un calcul d'une énergie dW_AR nécessaire à un réchauffement de l'agent réducteur (8).

6. Procédé de limitation (100) selon la revendication 4 ou la revendication 5, **caractérisé en ce que** la troisième étape de modélisation (103) comprend une deuxième phase de calcul qui comprend un calcul d'une énergie de vaporisation dW_Vap_Eau d'une eau liquide contenue à l'intérieur de l'agent réducteur (8), une troisième phase de calcul qui comprend un calcul d'une énergie dW_Eau_Gaz qui est nécessaire à une mise à la température de la troisième paroi (15) de l'eau à l'état gazeux, une quatrième phase de calcul qui comprend un calcul d'une énergie de chauffage dW_Urée nécessaire à un chauffage d'une urée comprise à l'intérieur de l'agent réducteur (8).

7. Procédé de limitation (100) selon l'une quelconque des revendications 4 à 6, **caractérisé en ce que** la troisième étape de modélisation (103) comprend une cinquième phase de calcul qui comprend un calcul d'une énergie de thermolyse dW_Thermolyse pour obtenir de l'ammoniac $NH_3$, une sixième phase de calcul qui comprend un calcul d'une énergie de chauffage dW_HNCO jusqu'à une température d'hydrolyse d'un acide isocyanique.

8. Procédé de limitation (100) selon l'une quelconque des revendications 4 à 7, **caractérisé en ce que** la troisième étape de modélisation (103) comprend une septième phase de calcul qui comprend un calcul d'une énergie d'hydrolyse dW_Hydrolyse d'un acide isocyanique, une huitième phase de calcul qui comprend un calcul d'une énergie de chauffage dW_comp_fin de composants finaux.

9. Procédé de limitation (100) selon la revendication 8, **caractérisé en ce que** la quatrième étape de calcul (104) de la température de première paroi (12) comprend un calcul de la température de la troisième paroi (15) à partir d'une intégration du premier flux thermique $FT1_{gaz/paroi}$, du deuxième flux thermique $FT2_{air/paroi}$, de l'énergie dW_AR, de l'énergie de vaporisation dW_Vap_Eau, de l'énergie dW_Eau_Gaz, de l'énergie de chauffage dW_Urée, de l'énergie de thermolyse dW_Thermolyse, de l'énergie de chauffage dW_HNCO, de l'énergie d'hydrolyse dW_Hydrolyse et de l'énergie de chauffage dW_comp_fin de composants finaux.

10. Procédé de limitation (100) selon l'une quelconque des revendications précédentes, **caractérisé en ce que** la cinquième étape de détermination (105) d'un risque d'encrassement du mixeur (11) est indifféremment réalisée à partir d'un calcul d'une masse M_AR maximale de l'agent réducteur (8) à injecter, à partir d'un calcul d'une température de paroi $T_{paroi}$ ou bien à partir d'un calcul d'un débit-limite $D_{limite}$ d'agent réducteur (8) par cartographie, pour une mise en oeuvre de la sixième étape de décision (106) d'une injection d'agent réducteur (8) à l'intérieur de la ligne d'échappement (4).

## Patentansprüche

1. Verfahren zur Begrenzung (100) einer Verschmutzung eines Mixers (11), der im Inneren eines Abgasstrangs (4) untergebracht ist, der eine Brennkraftmaschine (1) eines Kraftfahrzeugs ausstattet, wobei das Begrenzungsverfahren (100) einen ersten Modellierungsschritt (101) erster Wärmeaustausche zwischen Abgasen (2) und einer ersten Wand (12) des Mischers (11) umfasst, einen zweiten Modellierungsschritt (102) zweiter Wärmeaustausche zwischen einer Luft (13) außerhalb des Kraftfahrzeugs und einer zweiten Wand (14), die den Abgasstrang (4) abgrenzt, einen dritten Modellierungsschritt (103) dritter Wärmeaustausche zwischen einem Reduktionsmittel (8), das in das Innere des Abgasstrangs (4) eingespritzt wird, und der ersten Wand (12) bei einer Zerfallsreaktion des Reduktionsmittels (8), einen vierten Schritt des Berechnens (104) einer Temperatur der ersten Wand (12), einen fünften Schritt des Bestimmens (105) einer Verschmutzungsgefahr des Mischers (11), und einen sechsten Schritt des Entscheidens (106) einer Einspritzung von Reduktionsmittel (8) in das Innere des Abgasstrangs (4).

2. Begrenzungsverfahren (100) nach dem vorhergehenden Anspruch, **dadurch gekennzeichnet, dass** der erste Modellierungsschritt (101) der ersten Wärmeaustausche zwischen den Abgasen (2) und der ersten Wand (12) des Mischers (11) eine Phase der Berechnung eines ersten Wärmeflusses $FT1_{Gaz/Paroi}$ zwischen den Abgasen (2) und der ersten Wand (12) umfasst.

3. Begrenzungsverfahren (100) nach einem der vorhergehenden Ansprüche, **dadurch gekennzeichnet, dass** der zweite Modellierungsschritt (102) der zweiten Wärmeaustausche zwischen einer Luft (13) außerhalb des Fahrzeugs und einer zweiten Wand (14), die den Abgasstrang (4) abgrenzt, eine Phase der Berechnung eines zweiten Wärmeflusses $FG2_{Gaz/Paroi}$ zwischen der Außenluft (13) und einer dritten Wand (15) des Mischers (11), die der Außenluft (13) ausgesetzt ist, umfasst.

4. Begrenzungsverfahren (100) nach einem der vorhergehenden Ansprüche, **dadurch gekennzeichnet, dass** der dritte Modellierungsschritt (103) der dritten Wärmeaustausche zwischen dem Reduktionsmittel (8) und der ersten Wand (12) bei einer Zerfallsreaktion des Reduktionsmittels (8) Phasen des Berechnens von Energie umfasst, die für das Zerfallen des Reduktionsmittels (8) in Harnstoff und dann in Ammoniak $NH_3$ erforderlich ist.

5. Begrenzungsverfahren (100) nach Anspruch 4, **dadurch gekennzeichnet, dass** der dritte Modellierungsschritt (103) eine erste Berechnungsphase umfasst, die ein Berechnen einer Energie dW_AR umfasst, die für ein Erhitzen des Reduktionsmittels (8) erforderlich ist.

6. Begrenzungsverfahren (100) nach Anspruch 4 oder Anspruch 5, **dadurch gekennzeichnet, dass** der dritte Modellierungsschritt (103) eine zweite Berechnungsphase umfasst, die eine Berechnung einer Verdampfungsenergie dW_Vap_Eau eines flüssigen Wassers umfasst, das innerhalb des Reduktionsmittels (8) enthalten ist, eine dritte Berechnungsphase, die eine Berechnung einer Energie dW_Eau_Gaz umfasst, die zum Aufwärmen der Temperatur der dritten Wand (15) des Wassers in den gasförmigen Zustand erforderlich ist, eine vierte Berechnungsphase, die eine Berechnung von Heizenergie dW_Urée umfasst, die zum Heizen eines Harnstoffs, der innerhalb des Reduktionsmittels (8) enthalten ist, erforderlich ist.

7. Begrenzungsverfahren (100) nach einem der Ansprüche 4 bis 6, **dadurch gekennzeichnet, dass** der dritte Modellierungsschritt (103) eine fünfte Berechnungsphase umfasst, die eine Berechnung einer Thermolyseenergie zum Erhalten des Ammoniaks $NH_3$ umfasst, eine sechste Berechnungsphase, die eine Berechnung einer Heizenergie dW_HNCO bis zu einer Hydrolysetemperatur einer Isocyansäure umfasst.

8. Begrenzungsverfahren (100) nach einem der Ansprüche 4 bis 7, **dadurch gekennzeichnet, dass** der dritte Modellierungsschritt (103) eine siebte Berechnungsphase umfasst, die eine Berechnung einer Hydrolyseenergie dW_Hydrolyse einer Isocyansäure umfasst, eine achte Berechnungsphase, die eine Berechnung einer Heizenergie dW_comp_fin abschließender Bestandteile umfasst.

9. Begrenzungsverfahren (100) nach Anspruch 8, **dadurch gekennzeichnet, dass** der vierte Schritt des Berechnens (104) der Temperatur der ersten Wand (12) eine Berechnung der Temperatur der dritten Wand (15) ausgehend von einer Integration des ersten Wärmeflusses $FT1_{Gaz/Paroi}$, des zweiten Wärmeflusses $FT2_{Gaz/Paroi}$, der Energie dW_AR der Verdampfungsenergie dW_Vap_Eau, der Energie dW_Eau-Gaz, der Heizenergie dW_Urée, der Thermolyseenergie dW_Thermolyse, der Heizenergie dW_HNCO, der Hydrolyseenergie dW_Hydrolyse sowie der Heizenergie dW_comp_fin abschließender Bestandteile umfasst.

10. Begrenzungsverfahren (100) nach einem der vorhergehenden Ansprüche, **dadurch gekennzeichnet, dass** der fünfte Schritt des Bestimmens (105) einer Verschmutzungsgefahr des Mischers (11) gleichermaßen ausgehend von einer Berechnung einer maximalen Masse M_AR des Reduktionsmittels (8), das einzuspritzen ist, ausgehend von einer Berechnung einer Wandtemperatur $T_{paroi}$ oder ausgehend von einer Berechnung eines Grenzdurchsatzes $D_{limite}$ von Reduktionsmittel (8) durch Kartographie ausgeführt wird, um den sechsten Schritt des Entscheidens (106) einer Einspritzung von Reduktionsmittel (8) in das Innere des Abgasstrangs (4) umzusetzen.

## Claims

1. A method (100) for limiting fouling of a mixer (11) housed in the interior of an exhaust line (4) which equips an internal combustion engine (1) of a motor vehicle, the limiting method (100) including a first modelling step (101) of first heat exchanges between exhaust gases (2) and a first wall (12) of the mixer (11), a second modelling step (102) of second heat exchanges between an exterior air (13) to the motor vehicle and a second wall (14) delimiting the exhaust line (4), a third modelling step (103) of third heat exchanges between a reducing agent (8) injected in the interior of the exhaust line (4) and the first wall (12) during a decomposition reaction of the reducing agent (8), a fourth calculation step (104) of a temperature of the first wall (12), a fifth determination step (105) of a risk of fouling of the mixer (11), and a sixth decision step (106) of an injection of reducing agent (8) in the interior of the exhaust line (4).

2. The limiting method (100) according to the preceding claim, **characterized in that** the first modelling step (101) of the first heat exchanges between the exhaust gases (2) and the first wall (12) of the mixer (11) includes a calculation phase of a first heat flow $FT1_{gas/wall}$ between the exhaust gases (2) and the first wall (12).

3. The limiting method (100) according to any one of the preceding claims, **characterized in that** the second modelling step (102) of the second heat exchanges between an exterior air (13) to the motor vehicle and a second wall (14) delimiting the exhaust line (4) includes a calculation phase of a second heat flow $FT2_{air/wall}$ between the exterior air (13) and a third wall (15) of the mixer (11) which is exposed to the exterior air (13).

4. The limiting method (100) according to any one of the preceding claims, **characterized in that** the third modelling step (103) of the third heat exchanges between the reducing agent (8) and the first wall (12) during a decomposition reaction of the reducing agent (8) includes necessary energy calculation phases for decomposing the reducing agent (8) into urea, then into ammonia $NH_3$.

5. The limiting method (100) according to Claim 4, **characterized in that** the third modelling step (103) includes a first calculation phase which includes a calculation of an energy dW/AR necessary for a reheating of the reducing agent (8).

6. The limiting method (100) according to Claim 4 or Claim 5, **characterized in that** the third modelling step (103) includes a second calculation phase which includes a calculation of a vaporisation energy dW_Vap_Water of a liquid water contained in the interior of the reducing agent (8), a third calculation phase which includes a calculation of an energy dW_Water_Gas which is necessary for a tempering of the third wall (15) of the water at gaseous state, a fourth calculation phase which includes a calculation of a heating energy dW_urea necessary for a heating of a urea comprised in the interior of the reducing agent (8).

7. The limiting method (100) according to any one of Claims 4 to 6, **characterized in that** the third modelling step (103) includes a fifth calculation phase which includes a calculation of a thermolysis energy dW_Thermolysis for obtaining ammonia $NH_3$, a sixth calculation phase which includes a calculation of a heating energy dW_HNCO up to a hydrolysis temperature of an isocyanic acid.

8. The limiting method (100) according to any one of Claims 4 to 7, **characterized in that** the third modelling step (103) includes a seventh calculation phase which includes a calculation of a hydrolysis energy dW_Hydrolysis of an isocyanic acid, an eighth calculation phase which includes a calculation of a heating energy dW_comp-fin of final components.

9. The limiting method (100) according to Claim 8, **characterized in that** the fourth calculation step (104) of the temperature of the first wall (12) includes a calculation of the temperature of the third wall (15) from an integration of the first heat flow $FT1_{gas/wall}$, of the second heat flow $FT2_{air/wall}$, of the energy dW/AR, of the vaporisation energy dW_Vap_Water, of the energy dW_Water_Gas, of the heating energy dW_Urea, of the thermoysis energy dW_Thermolysis, of the heating energy dW_HNCO, of the hydrolysis energy dW-Hydrolysis and of the heating energy dW_comp-fin of final components.

10. The limiting method (100) according to any one of the preceding claims, **characterized in that** the fifth determination step (105) of a risk of fouling of the mixer (11) is realized indiscriminately from a calculation of a maximum mass M_AR of reducing agent (8) to be injected, from a calculation of a wall temperature $T_{wall}$ or else from a calculation of a limit rate $D_{limit}$ of reducing agent (8) by mapping, for an implementation of the sixth decision step (106) of an injection of reducing agent (8) in the interior of the exhaust line (4).

Fig.1

EP 2 966 276 B1

100

| 101 | → | 102 | → | 103 | → | 104 | → | 105 | → | 106 |

Fig.2

Fig.3

EP 2 966 276 B1

**EP 2 966 276 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070217984 A

- DE 202012011764 U